# EUROPEAN PATENT SPECIFICATION

(11) **EP 2 096 024 B1**
(45) Date of publication and mention of the grant of the patent: **25.08.2010**
(21) Application number: 08102105.7
(22) Date of filing: 28.02.2008
(51) Int. Cl.: B62K 25/24, B62K 25/08, B60G 3/18

(54) **Shock-absorbing suspension device for wheeled vehicle**
Stoßdämpfende Aufhängungsvorrichtung für ein Fahrzeug mit Rädern
Dispositif de suspension d'amortissement pour véhicule à roues

(43) Date of publication of application: 02.09.2009
(73) Proprietor: Chen, Hsueh-Yi, Hsin-Shih Hsiang, Tainan Hsien (TW)
(72) Inventor: Chen, Hsueh-Yi, Hsin-Shih Hsiang, Tainan Hsien (TW)
(74) Representative: Texier, Christian

(56) References cited:
- EP-A- 0 199 188
- GB-A- 2 207 645
- GB-A- 2 388 827
- US-A- 913 961
- US-A- 6 036 211

## Description

This invention relates to a shock-absorbing suspension device for a wheeled vehicle, more particularly to a shock-absorbing suspension device for coupling a frame of the wheeled vehicle with a wheel axle according to the preamble of claim 1.

A shock-absorbing suspension device according to the preamble of claim 1 is disclosed in U. S. Patent No. 913, 961 which includes upper and lower vertically swinging links which are loosely connected between a front fork and a steering head of a bicycle frame, and a spring cushioning member which is disposed between a crossbar of the front fork and the steering head so as to absorb or cushion shocks and jars transmitted to the bicycle frame due to passing of the bicycle over rough and uneven roadways.

However, since the moving stroke of the swinging links is short, a large amount of shock is still transmitted to the bicycle frame, thereby reducing the shock absorbing of the device.

The object of the present invention is to provide a shock-absorbing suspension device with a counteracting member which is movable upwards and downwards so as to effectively dampen shocks transmitted to a frame of a wheeled vehicle.

According to this invention, the shock-absorbing suspension device includes a mounting rod, a wheel rod, a counteracting member, upper and lower linking bars, a cantilever arm, and a force transmitting member.

The mounting rod is adapted to be mounted on a frame of a wheeled vehicle, and has upper and lower ends opposite to each other in an upright direction. The wheel rod has a lower segment which is adapted to be mounted on a wheel axle of the vehicle to transmit upwards from the wheel axle a shock force generated as a result of passing of the wheeled vehicle over an uneven road surface, and an upper segment which extends from the lower segment in the upright direction to terminate at a top end that is jerked upwards and downwards when the shock force is transmitted upwards. The upper segment has proximate and distal regions relative to the top end, and is disposed forwardly of the mounting rod in a longitudinal direction transverse to the upright direction.

The counteracting member includes a pivoted region which is pivotally mounted on the lower end of the mounting rod about a pivoting axis in a transverse direction transverse to both the upright and longitudinal directions, and a counteracting body which extends from the pivoted region forwardly to terminate at a coupler area that extends in the upright direction to terminate at upper and lower linked ends.

The upper linking bar is disposed to couple the upper linked end to the proximate region, and the lower linking bar is disposed to couple the lower linked end to the distal region to thereby form a four-bar linkage mechanism, such that upward or downward jerking movement of the top end results in upward and downward movement of the coupler area of the counteracting body about the pivoting axis, thereby dampening the shock force transmitted to the counteracting body. The cantilever arm is disposed to extend from the upper end in the longitudinal direction to terminate at a bearing end. The force transmitting member is disposed to couple with the four-bar linkage mechanism so as to transmit the dampened shock force to the bearing end to thereby minimize the impact of the shock force on the mounting rod.

Preferably, a connecting rod is configured to couple the upper segment to one of the force transmitting member and the cantilever arm so as to generate an auxiliary counteracting force to urge the force transmitting member against the upward or downward jerking movement.

Other features and advantages of the present invention will become apparent in the following detailed description of the preferred embodiments of the invention, with reference to the accompanying drawings, in which:
Fig. 1 is a perspective view of the first preferred embodiment of a shock-absorbing suspension device according to this invention;
Fig. 2 is an exploded perspective view of the first preferred embodiment;
Fig. 3 is a schematic side view of the first preferred embodiment;
Fig. 4 is a schematic diagram of the first preferred embodiment in a non-use state;
Fig. 5 is a schematic diagram of the first preferred embodiment in a state of use;
Fig. 6 is a schematic diagram of the first preferred embodiment in a state where a wheel is passing over a bumpy roadway;
Fig. 7 is a schematic diagram of the second preferred embodiment of a shock-absorbing suspension device according to this invention in a state of use;
Fig. 8 is a schematic diagram of the third preferred embodiment of a shock-absorbing suspension device according to this invention in a state of use; and
Fig. 9 is a schematic diagram of the fourth preferred embodiment of a shock-absorbing suspension device according to this invention in a state of use.

Before the present invention is described in greater detail, it should be noted that same reference numerals have been used to denote like elements throughout the specification.

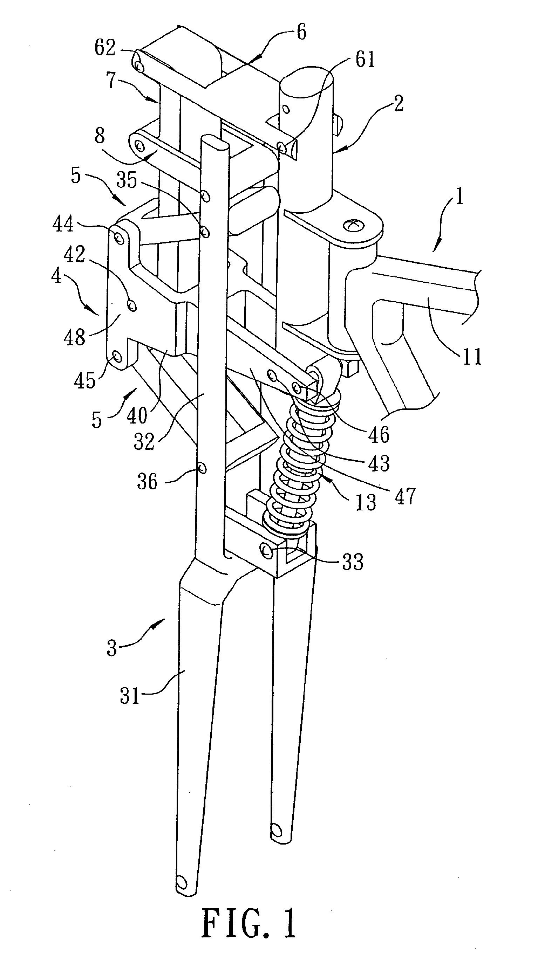

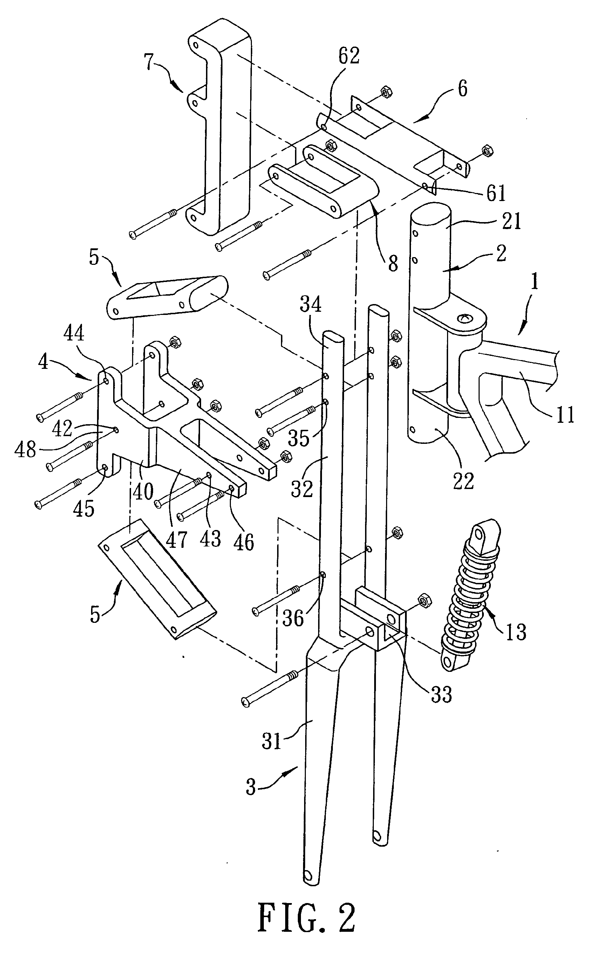

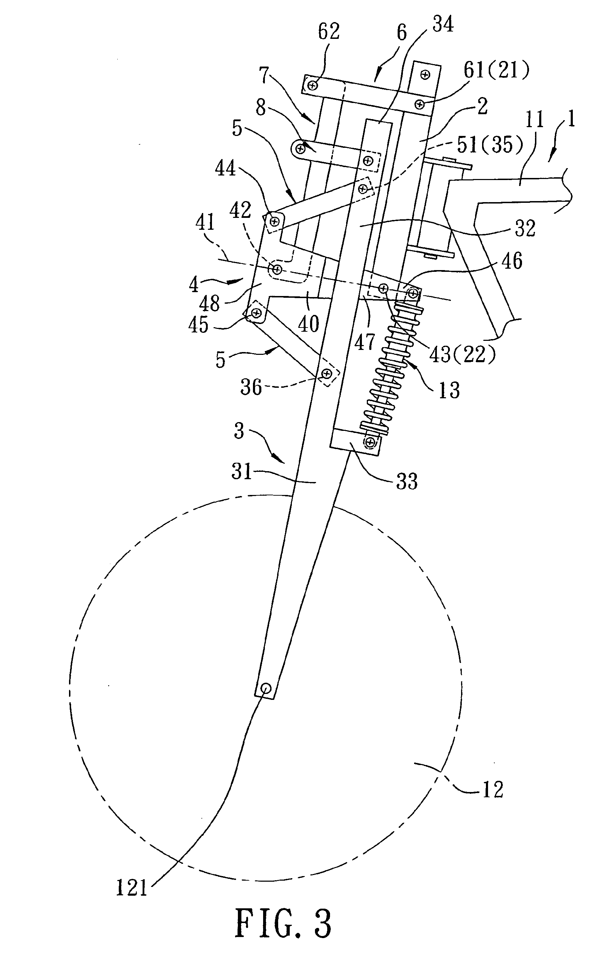

Referring to Figs. 1 to 3, the first preferred embodiment of a shock-absorbing suspension device according to the present invention is shown to comprise a mounting rod 2, a wheel rod 3, a counteracting member 4, upper and lower linking bars 5, a cantilever arm 6, a force transmitting member 7, a connecting rod 8, and a spring-loaded shock-absorber 13.

The mounting rod 2, such as a steering rod, includes upper and lower ends 21,22 opposite to each other in an upright direction, and is adapted to be rotatably mounted on a frame 11 of a wheeled vehicle 1, such as a motorcycle or a bicycle.

The wheel rod 3 has a fork-type lower segment 31 which is adapted to be mounted on a wheel axle 121 of a front wheel 12 of the wheeled vehicle 1 to transmit upwards from the wheel axle 121 a force of shock generated as a result of passing of the wheeled vehicle 1 over an uneven road surface, and an upper segment 32 which extends from the lower segment 31 in the upright direction to terminate at a top end 34 that is jerked upwards and downwards when the shock force is transmitted upwards. The upper segment 32 has proximate and distal regions 35,36 relative to the top end 34, and is disposed forwardly of the mounting rod 2 in a longitudinal direction transverse to the upright direction.

The counteracting member 4 includes a pivoted region 47 which is pivotally mounted on the lower end 22 of the mounting rod 2 about a pivoting axis 43 in a transverse direction transverse to both the upright and longitudinal directions, and a counteracting body 40 which extends forwardly from the pivoted region 47 to terminate at a coupler area 48 that extends in the upright direction to terminate at upper and lower linked ends 44,45.

The upper linking bar 5 is disposed to couple the upper linked end 44 of the counteracting member 4 to the proximate region 35 of the wheel rod 3, and the lower linking bar 5 is disposed to couple the lower linked end 45 of the counteracting member 4 to the distal region 36 of the wheel rod 3 such that the coupler area 48, the upper and lower linking bars 5 and the upper segment 32 form a four-bar linkage mechanism. Thus, as a result of upward or downward jerking movement of the top end 34 of the wheel rod 3 when the wheel 12 is passing over an uneven road surface, the coupler area 48 of the counteracting body 4 is moved downwards or upwards about the pivoting axis 43, thereby dampening the shock force transmitted to the counteracting body 40.

The cantilever arm 6 has a rear bearing end 61 which is pivotally connected to the upper end 21 of the mounting rod 2, and extends in the longitudinal direction to terminate at a front bearing end 62.

The force transmitting member 7 is configured to couple the counteracting body 40 to the front bearing end 62 of the cantilever arm 6 so as to impart the dampened shock force to the upper end 21 of the mounting rod 2, thereby minimizing the impact of the shock force on the mounting rod 2.

The connecting rod 8 is configured to couple the upper segment 32 of the wheel rod 3 to the force transmitting member 7 so as to generate an auxiliary counteracting force to urge the force transmitting member 7 against the upward or downward jerking movement of the top end 34.

The spring-loaded shock-absorber 13 is a known mechanism, and is disposed to couple a mounting rack 33 of the wheel rod 3 to the pivoted region 47 of the counteracting member 4 at a position that is rearwardly of the pivoting axis 43. It is noted that the number and position of the spring-loaded shock-absorber 13 described above are for purposes of illustration only and are not intended to limiting the scope of this invention.

Specifically, the upper and lower linking bars 5 respectively define upper and lower lengthwise lines which extend forwardly and intersect at a vertex 49. The force transmitting member 7 is coupled to the counteracting body 40 at a pivotal point 42 such that a pivotal axis passing through the pivotal point 42 is oriented in a direction parallel to the pivoting axis 43, and such that the pivotal axis intersects a straight line 41 drawn between the vertex 49 and the pivotal axis substantially at a right angle. Moreover, in terms of the four-bar linkage mechanism, a frame-side length measured along the upper segment 32 is two times a coupler-side length measured along the coupler area 48.

In this embodiment, the connecting rod 8 is disposed to extend parallel to the straight line 41. The connecting rod 8 has a length which is the same as a distance between the pivotal point 42 and the upper segment 32 along the straight line 41.

In this embodiment, the connecting rod 8 is disposed between the cantilever arm 6 and the upper linking bar 5 in the upright direction.

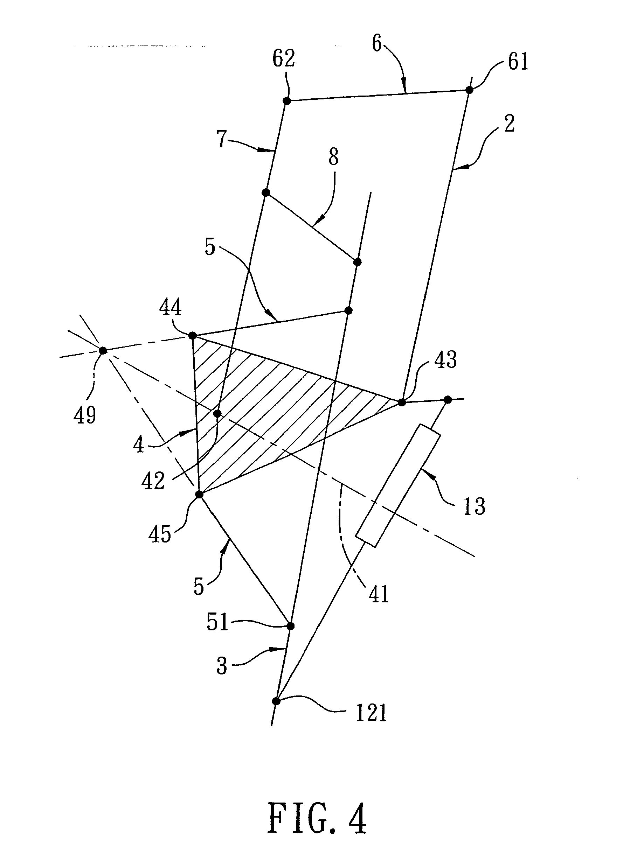

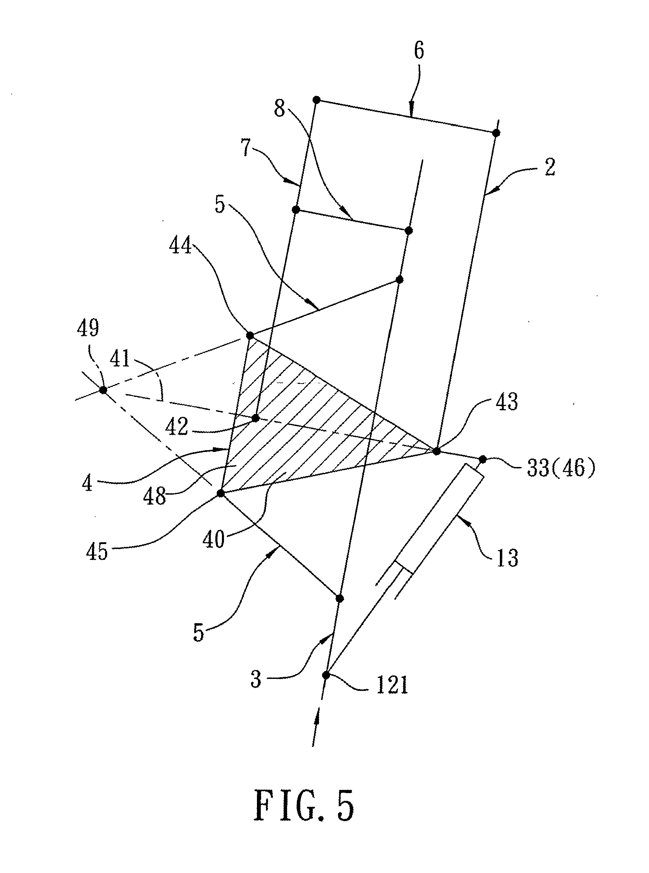

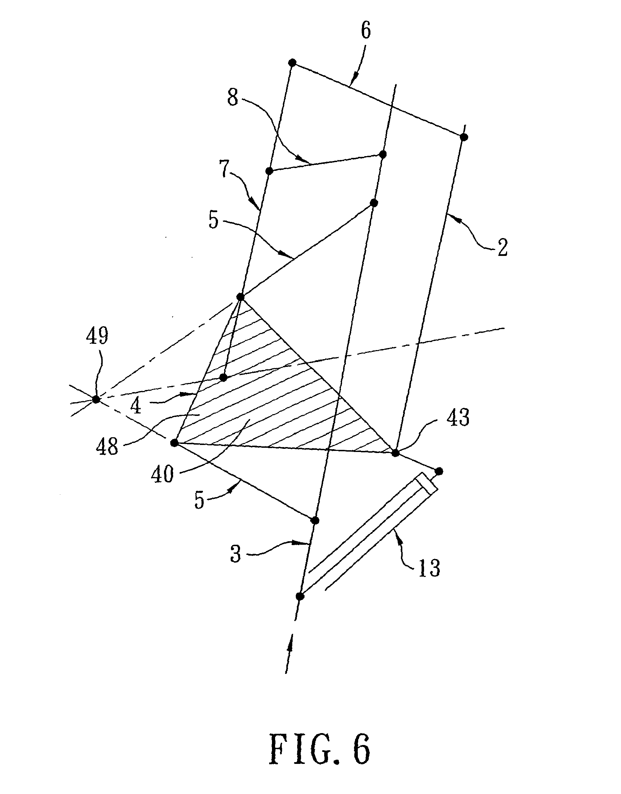

Fig. 4 shows the suspension device in a non-use state where the spring-loaded shock-absorber 13 is not compressed. Fig. 5 shows the suspension device in a state of use where the rider is seated on the bicycle frame 11. When the front wheel 12 moves over a bumpy road surface, as shown in Fig. 6, the coupler area 48 of the counteracting body 40 is swung about the pivoting axis 43 through the upper and lower linking bars 5 and the connecting rod 8, thereby dampening the shock force transmitted to the counteracting body 40. The shock force is further dampened through the force transmitting member 7 and the cantilever arm 6. Moreover, through compression of the spring-loaded shock-absorber 13, the impact of the shock force on the mounting rod 2 can be minimized. The suspension device of this invention can be returned to the state shown in Fig. 5 by virtue of the restoring force of the spring-loaded shock-absorber 13. As illustrated, with the shock-absorbing suspension device of this invention, the shock force generated as a result of upward or downward jerking movement of the wheel rod 3 can be transmitted to the upper and lower linking bars 5 and the connecting rod 8 to swing the counteracting body 40 about the pivoting axis 43 so that the shock force is dampened. The dampened shock force is then transmitted to the force transmitting member 7 and the cantilever arm 6 so that the shock force is further dampened and imparted to the mounting rod 2. Thus, the shock force can be effectively dampened before being transmitted to the frame 11 of the wheeled vehicle 1.

The connecting rod 8 described above and shown in the first preferred embodiment is illustrated to be disposed between the cantilever arm 6 and the upper linking bar 5. However, many variations in the positional relationship among the connecting rod 8, the upper linking bar 5 and the cantilever arm 6 can be made. For example, the connecting rod 8 may be disposed parallel to and at the same height as the cantilever arm 6. The cantilever arm 6 and the connecting rod 8 may be located at a slightly lower height relative to the upper linking bar 5. The connecting rod 8 and the upper linking bar 5 may be coaxially pivoted to the upper segment 32.

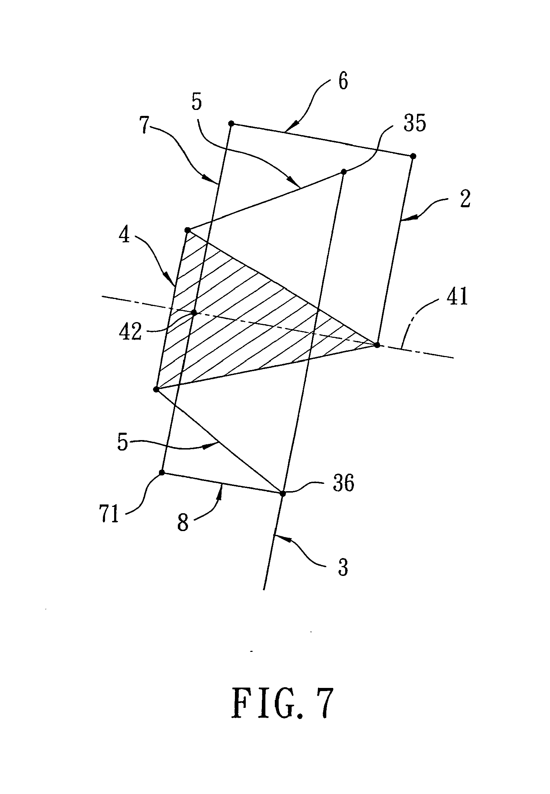

Referring to Fig. 7, the second preferred embodiment of a shock-absorbing suspension device according to this invention is shown to be similar to the first embodiment in construction, except that the force transmitting member 7 in this embodiment is configured to extend downwardly from the pivotal point 42 to terminate at a lower coupled end 71, and the connecting rod 7 is disposed to couple the distal region 36 to the lower coupled end 71. In this embodiment, the connecting rod 7 and the lower linking bar 5 are coaxially pivoted to the distal region 36. It is noted that the connecting rod 8 may be disposed upwardly or downwardly of the lower linking bar 5.

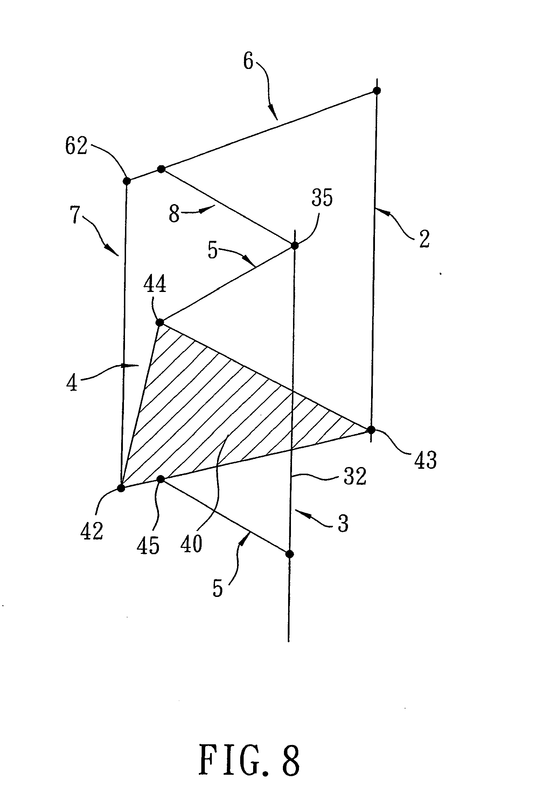

Referring to Fig. 8, the third preferred embodiment of a shock-absorbing suspension device according to this invention is shown to be similar to the first embodiment in construction, except that the force transmitting member 7 in this embodiment is configured to be coupled to the counteracting body 40 at a pivotal point 42 that is forwardly of the lower linked end 45 and that is in line with a straight line drawn between the lower linked end 45 and the pivoting axis 43. In addition, the connecting rod 8 is disposed to couple the upper segment 32 to the cantilever arm 6 at a position proximate to the front bearing end 62. It is noted that the pivotal point 42 at which the force transmitting member 7 is coupled to the counteracting body 40 may be disposed rearwardly of the lower linked end 45, rather than forwardly of the lower linked end 45, and the connecting rod 8 is coupled to the cantilever arm 6 at the position that is forwardly of the front bearing end 62.

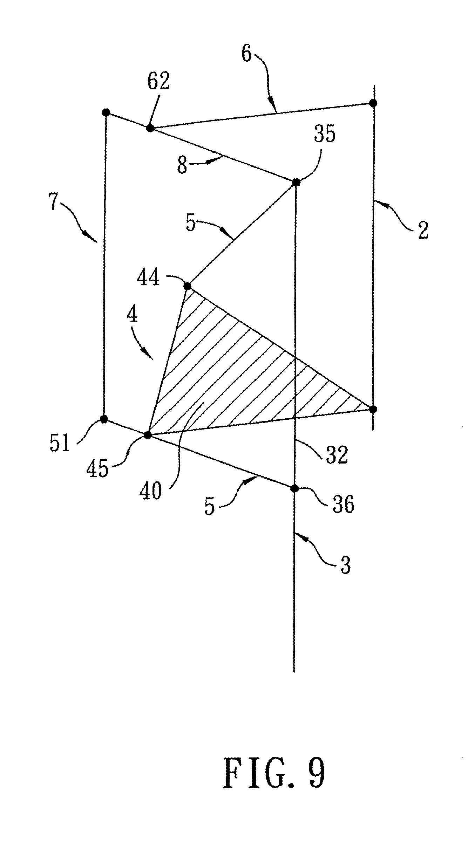

Referring to Fig. 9, the fourth preferred embodiment of a shock-absorbing suspension device according to this invention is shown to be similar to the first embodiment in construction, except that the force transmitting member 7 in this embodiment is configured to be coupled to the four-bar linkage mechanism at a position that is forwardly of the lower linked end 45, and that is in a lengthwise line of the lower linking bar 5. In particular, the lower linking bar 5 extends from the lower linked end 45 to terminate at a forward linked end 51 such that the force transmitting member 7 is linked to the forward linked end 51. In addition, the force transmitting member 7 is coupled to the connecting rod 8, rather than the cantilever arm 6. The front bearing end 62 of the cantilever arm 6 is pivotally mounted on the connecting rod 8, and is disposed rearwardly of the force transmitting member 7. Thus, while the force transmitting member 7 transmits the dampened shock force to the front bearing end 62, the connecting rod 8 generates an auxiliary counteracting force to urge the force transmitting member 7 against the upward or downward jerking movement. It is noted that the force transmitting member 7 may be disposed rearwardly of the lower linked end 45.

## Claims

1. A shock-absorbing suspension device adapted to couple a frame (11) of a wheeled vehicle (1) with a wheel axle (121), comprising:
a mounting rod (2) which is adapted to be mounted on the frame (11), and which has upper and lower ends (21,22) opposite to each other in an upright direction; and
a wheel rod (3) having a lower segment (31) which is adapted to be mounted on the wheel axle (121) to transmit upwards from the wheel axle (121) a shock force generated as a result of passing of the wheeled vehicle (1) over an uneven road surface, and an upper segment (32) which extends from said lower segment (31) in the upright direction to terminate at a top end (34) that is jerked upwards and downwards when the shock force is transmitted upwards, and which has proximate and distal regions (35, 36) relative to said top end (34), said upper segment (32) being disposed forwardly of said mounting rod (2) in a longitudinal direction transverse to the upright direction, **characterized by:**
a counteracting member (4) including
a pivoted region (47) which is pivotally mounted on said lower end (22) of said mounting rod (2) about a pivoting axis (43) in a transverse direction transverse to both the upright and longitudinal directions, and
a counteracting body (40) configured to extend from said pivoted region (47) forwardly to terminate at a coupler area (48) which extends in the upright direction to terminate at upper and lower linked ends (44, 45);
upper and lower linking bars (5), said upper linking bar (5) being disposed to couple said upper linked end (44) to said proximate region (35), said lower linking bar (5) being disposed to couple said lower linked end (45) to said distal region (36) to thereby form a four-bar linkage mechanism such that, as a result of upward or downward jerking movement of said top end (34), said coupler area (48) of said counteracting body (4) is moved downwards or upwards about the pivoting axis (43), thereby dampening the shock force transmitted to said counteracting body (40);
a cantilever arm (6) disposed to extend from said upper end (21) in the longitudinal direction to terminate at a bearing end (62); and
a force transmitting member (7) disposed to couple with said four-bar linkage mechanism so as to transmit the dampened shock force to said bearing end (62) to thereby minimize impact of the shock force on said mounting rod (2).

2. The shock-absorbing suspension device according to Claim 1, **characterized in that** said upper and lower linking bars (5) respectively define upper and lower lengthwise lines which extend forwardly and which intersect at a
vertex (49), said force transmitting member (7) being coupled to said counteracting body (40) at a pivotal point (42) such that a pivotal axis passing through the pivotal point (42) is oriented in a direction parallel to the pivoting axis (43), and such that the pivotal axis intersects a straight line drawn between the vertex (49) and the pivoting axis (43) substantially at a right angle.

3. The shock-absorbing suspension device according to Claim 2, **characterized in that,** in terms of the four-bar linkage, a frame-side length measured along said upper segment (32) is two times a coupler-side length measured along said coupler area (48).

4. The shock-absorbing suspension device according to Claim 2, **further characterized by** a connecting rod (8) configured to couple said upper segment (32) to said force transmitting member (7) so as to generate an auxiliary counteracting force to urge said force transmitting member (7) against the upward or downward jerking movement of said top end (34).

5. The shock-absorbing suspension device according to Claim 4, **characterized in that** said connecting rod (8) is disposed to extend parallel to said straight line (44).

6. The shock-absorbing suspension device according to Claim 5, **characterized in that** said connecting rod (8) has a length which is the same as a distance between said pivotal point (42) and said upper segment (32) along the straight line (41).

7. The shock-absorbing suspension device according to Claim 4, **characterized in that** said connecting rod (8) is disposed between said cantilever arm (6) and said upper linking bar (5) in the upright direction.

8. The shock-absorbing suspension device according to Claim 3, **characterized in that** said force transmitting member (7) is configured to extend from said pivotal point downwardly to terminate at a lower coupled end (71), said shock-absorbing suspension device further comprising a connecting rod (8) disposed to couple said distal region (36) to said lower coupled end (71) so as to generate an auxiliary counteracting force to urge said force transmitting member (7) through said lower coupled end (71) against the upward or downward jerking movement of said top end (34).

9. The shock-absorbing suspension device according to Claim 1, **further characterized by** a spring-loaded shock-absorber (13) disposed to couple said wheel rod (3) to said pivoted region (47) at a position that is rearwardly of said pivoting axis (43).

10. The shock-absorbing suspension device according to Claim 1, **characterized in that** said force transmitting member (7) is configured to couple said counteracting body (40) to said bearing end (62).

11. The shock-absorbing suspension device according to Claim 1, **characterized in that** said force transmitting member (7) is configured to couple said four-bar linkage mechanism at a position that is forwardly of said lower linked end (45), and that is in line with a straight line drawn between said lower linked end (45) and said pivoting axis, said shock-absorbing suspension device further comprising a connecting rod (8) which is disposed to couple said upper segment (32) to said cantilever arm (6) at a position proximate to said bearing end (62) so as to generate an auxiliary counteracting force to urge said force transmitting member (7) against the upward or downward jerking movement of said top end (34).

12. The shock-absorbing suspension device according to Claim 1, **characterized in that** said force transmitting member (7) is configured to couple said four-bar linkage mechanism at a position that is forwardly of said lower linked end (45), and that is in a lengthwise line of said lower linking bar (5), said shock-absorbing suspension device further comprising a connecting rod (8) which is disposed to couple said proximate region (35) to said force transmitting member (7), said bearing end (62) being pivotally mounted on said connecting rod (8), and being disposed rearwardly of said force transmitting member (7) such that, while said force transmitting member (7) transmits the dampened shock force to said bearing end (62), said connecting rod (8) generates an auxiliary counteracting force to urge said force transmitting member (7) against the upward or downward jerking movement of said top end (34).

## Patentansprüche

1. Stoßdämpfende Aufhängungsvorrichtung, die so ausgelegt ist, dass sie einen Rahmen (11) eines Radfahrzeugs (1) mit einer Radachse (121) koppelt und umfasst:
eine Befestigungsstange (2), die so ausgelegt ist, dass sie am Rahmen (11) befestigt wird, und die obere und untere Enden (21, 22) aufweist, die einander in einer senkrechten Richtung gegenüberliegen; und
eine Radstange (3) mit einem unteren Segment (31), das so ausgelegt ist, dass es an der Radachse (121) befestigt wird, um eine Stoßkraft, die infolge dessen erzeugt wird, dass das Radfahrzeug (1) über eine unebene Straßenfläche fährt, von der Radachse (121) nach oben zu übertragen, und einem oberen Segment (32), welches sich vom unteren Segment (31) in der senkrechten Richtung erstreckt, um an einem oberen Ende (34) zu enden, das nach oben und nach unten gestoßen wird, wenn die Stoßkraft nach oben übertragen wird, und welches nahe und ferne Regionen (35, 36) in Bezug auf das obere Ende (34) aufweist, wobei das obere Segment (32) in einer Längsrichtung quer zur senkrechten Richtung vorwärts von der Befestigungsstange (2) angeordnet ist, **gekennzeichnet durch**
ein entgegenwirkendes Element (4), umfassend
eine drehbare Region (47), die am unteren Ende (22) der Befestigungsstange (2) um eine Drehachse (43) in einer Querrichtung, die sowohl zu den senkrechten als auch zu den Längsrichtungen quer verläuft, drehbar befestigt ist, und
einen entgegenwirkenden Körper (40), der so konfiguriert ist, dass er sich von der drehbaren Region (47) vorwärts erstreckt, um an einem Kopplerbereich (48) zu enden, der sich in der senkrechten Richtung erstreckt, um an oberen und unteren verbundenen Enden (44, 45) zu enden;
obere und untere Koppelstangen (5), wobei die obere Koppelstange (5) so angeordnet ist, dass sie das obere verbundene Ende (44) mit der nahen Region (35) koppelt, und die untere Koppelstange (5) so angeordnet ist, dass sie das untere verbundene Ende (45) mit der fernen Region (36) koppelt, um **dadurch** einen Gestängemechanismus aus vier Stangen zu bilden, derart dass infolge der Auf- und Abwärtsstoßbewegung des oberen Endes (34) der Kopplerbereich (48) des Gegenkörpers (4) auf- und abwärts um die Drehachse (43) bewegt wird, um **dadurch** die Stoßkraft abzuschwächen, die auf den entgegenwirkenden Körper (40) übertragen wird;
einen Ausleger (6), der so angeordnet ist, dass er sich vom oberen Ende (21) in Längsrichtung erstreckt, um an einem tragenden Ende (62) zu enden; und
ein Kraft übertragendes Element (7), das so angeordnet ist, dass es mit dem Gestängemechanismus aus vier Stangen koppelt, um die abgeschwächte Stoßkraft auf das tragende Ende (62) zu übertragen, um **dadurch** die Auswirkung der Stoßkraft auf die Befestigungsstange (2) zu minimieren.

2. Stoßdämpfende Aufhängungsvorrichtung nach Anspruch 1, **dadurch gekennzeichnet, dass** die oberen und unteren Koppelstangen (5) jeweils obere und untere längsgerichtete Linien definieren, die sich vorwärts erstrecken und die sich an einem Scheitelpunkt (49) schneiden, wobei das Kraft übertragende Element (7) an einem Drehpunkt (42) derart mit dem entgegenwirkenden Körper (40) gekoppelt ist, dass eine Drehachse, die durch den Drehpunkt (42) verläuft, in einer Richtung parallel zur Drehachse (43) ausgerichtet ist, und derart, dass die Drehachse eine gerade Linie, die zwischen dem Scheitelpunkt (49) und der Drehachse (43) gezogen ist, im Wesentlichen in einem rechten Winkel schneidet.

3. Stoßdämpfende Aufhängungsvorrichtung nach Anspruch 2, **dadurch gekennzeichnet, dass** bezüglich des Gestänges aus vier Stangen eine rahmenseitige Länge gemessen entlang des oberen Segments (32) zweimal eine kopplerseitige Länge gemessen entlang des Kopplerbereichs (48) ist.

4. Stoßdämpfende Aufhängungsvorrichtung nach Anspruch 2, ferner **gekennzeichnet durch** eine Verbindungsstange (8), die so konfiguriert ist, dass sie das obere Segment (32) mit dem Kraft übertragenden Element (7) koppelt, um eine zusätzliche Gegenkraft zu erzeugen, um das Kraft übertragende Element (7) gegen die Auf- oder Abwärtsstoßbewegung des oberen Endes (34) zu drücken.

5. Stoßdämpfende Aufhängungsvorrichtung nach Anspruch 4, **dadurch gekennzeichnet, dass** die Verbindungsstange (8) so angeordnet ist, dass sie sich parallel zur geraden Linie (44) erstreckt.

6. Stoßdämpfende Aufhängungsvorrichtung nach Anspruch 5, **dadurch gekennzeichnet, dass** die Verbindungsstange (8) eine Länge aufweist, die gleich einer Distanz zwischen dem Drehpunkt (42) und dem oberen Segment (32) entlang der geraden Linie (41) ist.

7. Stoßdämpfende Aufhängungsvorrichtung nach Anspruch 4, **dadurch gekennzeichnet, dass** die Verbindungsstange (8) zwischen dem Ausleger (6) und der oberen Koppelstange (5) in der senkrechten Richtung angeordnet ist.

8. Stoßdämpfende Aufhängungsvorrichtung nach Anspruch 3, **dadurch gekennzeichnet, dass** das Kraft übertagende Element (7) so konfiguriert ist, dass es sich vom Drehpunkt nach unten erstreckt, um an einem gekoppelten Ende (71) zu enden, wobei die stoßdämpfende Aufhängungsvorrichtung ferner eine Verbindungsstange (8) umfasst, die so angeordnet ist, dass sie die ferne Region (36) mit dem unteren gekoppelten Ende (71) koppelt, um eine zusätzliche Gegenkraft zu erzeugen, um das Kraft übertragende Element (7) durch das untere gekoppelte Ende (71) gegen die Auf- oder Abwärtsstoßbewegung des oberen Endes (34) zu drücken.

9. Stoßdämpfende Aufhängungsvorrichtung nach Anspruch 1, ferner **gekennzeichnet durch** einen federbelasteten Stoßdämpfer (13), der so angeordnet ist, dass er die Radstange (3) mit der drehbaren Region (47) an einer Position koppelt, die rückwärts von der drehbaren Region (43) ist.

10. Stoßdämpfende Aufhängungsvorrichtung nach Anspruch 1, **dadurch gekennzeichnet, dass** das Kraft übertragende Element (7) so konfiguriert ist, dass es den entgegenwirkenden Körper (40) mit dem tragenden Ende (62) koppelt.

11. Stoßdämpfende Aufhängungsvorrichtung nach Anspruch 1, **dadurch gekennzeichnet, dass** das Kraft übertagende Element (7) so konfiguriert ist, dass es den Gestängemechanismus aus vier Stangen an einer Position koppelt, die vorwärts vom unteren verbundenen Ende (45) ist und die in Linie mit einer gerade Linie ist, die zwischen dem unteren verbundenen Ende (45) und der Drehachse gezogen ist, wobei die stoßdämpfende Aufhängungsvorrichtung ferner eine Verbindungsstange (8) umfasst, die so angeordnet ist, dass sie das obere Segment (32) mit dem Ausleger (6) an einer Position nahe dem tragenden Ende (62) koppelt, um eine zusätzliche Gegenkraft zu erzeugen, um das Kraft übertragende Element (7) gegen die Auf- oder Abwärtsstoßbewegung des oberen Endes (34) zu drücken.

12. Stoßdämpfende Aufhängungsvorrichtung nach Anspruch 1, **dadurch gekennzeichnet, dass** das Kraft übertragende Element (7) so konfiguriert ist, dass es den Gestängemechanismus aus vier Stangen an einer Position koppelt, die vorwärts vom unteren verbundenen Ende (45) ist und die in einer längsgerichteten Linie der unteren Koppelstange (5) ist, wobei die stoßdämpfende Aufhängungsvorrichtung ferner eine Verbindungsstange (8) umfasst, die so angeordnet ist, dass sie die nahe Region (35) mit dem Kraft übertragenden Element (7) koppelt, wobei das tragende Ende (62) drehbar auf der Verbindungsstange (8) befestigt ist und rückwärts vom Kraft übertragenden Element (7) angeordnet ist, derart dass, während das Kraft übertragende Element (7) die abgeschwächte Stoßkraft auf das tragende Ende (62) überträgt, die Verbindungsstange (8) eine zusätzliche Gegenkraft erzeugt, um das Kraft übertragende Element (7) gegen die Auf- oder Abwärtsstoßbewegung des oberen Endes (34) zu drücken.

## Revendications

1. Dispositif de suspension d'amortissement adapté pour coupler un châssis (11) d'un véhicule à roues (1) avec un essieu de roue (121), comprenant :
une tige de montage (2) qui est adaptée pour être montée sur le châssis (11) et qui a des extrémités supérieure et inférieure (21, 22) opposées l'une à l'autre dans une direction droite ; et
une tige de roue (3) ayant un segment inférieur (31) qui est adapté pour être monté sur l'essieu de roue (121) pour transmettre, vers le haut à partir de l'essieu de roue (121), une force de choc générée suite au passage du véhicule à roues (1) sur une surface de route irrégulière, et un segment supérieur (32) qui s'étend à partir dudit segment inférieur (31) dans une direction droite pour se terminer au niveau d'une extrémité supérieure (34) qui est secouée vers le haut et vers le bas lorsque la force de choc est transmise vers le haut, et qui a des régions proximale et distale (35, 36) par rapport à ladite extrémité supérieure (34), ledit segment supérieur (32) étant disposé vers l'avant de ladite tige de montage (2) dans une direction longitudinale transversale à la direction droite, **caractérisé par** :
un élément de réaction (4) comprenant :
une région pivotée (47) qui est montée de manière de pivotante sur ladite extrémité inférieure (22) de ladite tige de montage (2) autour d'un axe de pivotement (43) dans une direction transversale, transversale à la fois par rapport aux directions droite et longitudinale, et
un corps de réaction (40) configuré pour s'étendre à partir de ladite région pivotée (47) vers l'avant pour se terminer au niveau d'une zone de coupleur (48) qui s'étend dans la direction droite pour se terminer au niveau des extrémités reliées supérieure et inférieure (44, 45) ;
des barres de liaison supérieure et inférieure (5), ladite barre de liaison supérieure (5) étant disposée pour coupler ladite extrémité reliée supérieure (44) à ladite région proximale (35), ladite barre de liaison inférieure (5) étant disposée pour coupler ladite extrémité reliée inférieure (45) à ladite région distale (36) pour former ainsi un mécanisme de tringlerie à quatre barres de sorte que, suite au mouvement de secousse vers le haut ou vers le bas de ladite extrémité supérieure (34), ladite zone de coupleur (48) dudit corps de réaction (4) est déplacée vers le bas ou vers le haut autour de l'axe de pivotement (43), amortissant ainsi la force de choc transmise audit corps de réaction (40) ;
un bras en porte à faux (6) disposé pour s'étendre à partir de ladite extrémité supérieure (21) dans la direction longitudinale pour se terminer au niveau d'une extrémité de palier (62) ; et
un élément de transmission de force (7) disposé pour se coupler avec ledit mécanisme de tringlerie à quatre barres afin de transmettre la force de choc amortie à ladite extrémité de palier (62) pour minimiser ainsi l'impact de la force de choc sur ladite tige de montage (2).

2. Dispositif de suspension d'amortissement selon la revendication 1, **caractérisé en ce que** lesdites barres de liaison supérieure et inférieure (5) définissent respectivement des conduites supérieure et inférieure dans le sens de la longueur qui s'étendent vers l'avant et qui se coupent au niveau d'un sommet (49), ledit élément de transmission de force (7) étant couplé audit corps de réaction (40) au niveau d'un point de pivotement (42) de sorte qu'un axe de pivotement passant par le point de pivotement (42) est orienté dans une direction parallèle à l'axe de pivotement (43), et de sorte que l'axe de pivotement couple une ligne droite tirée entre le sommet (49) et l'axe de pivotement (43) sensiblement en angle droit.

3. Dispositif de suspension d'amortissement selon la revendication 2, **caractérisé en ce que,** en ce qui concerne la tringlerie à quatre barres, une longueur du côté du châssis mesurée le long dudit segment supérieur (32) représente deux fois une longueur du côté du coupleur mesurée le long de ladite zone de coupleur (48).

4. Dispositif de suspension d'amortissement selon la revendication 2, **caractérisé en outre par** une tige de raccordement (8) configurée pour coupler ledit segment supérieur (32) audit élément de transmission de force (7) afin de générer une force de réaction auxiliaire pour pousser ledit élément de transmission de force (7) contre le mouvement de secousse vers le haut ou vers le bas de ladite extrémité supérieure (34).

5. Dispositif de suspension d'amortissement selon la revendication 4, **caractérisé en ce que** ladite tige de raccordement (8) est disposée pour s'étendre parallèlement à ladite ligne droite (44).

6. Dispositif de suspension d'amortissement selon la revendication 5, **caractérisé en ce que** ladite tige de raccordement (8) a une longueur qui est la même qu'une distance entre ledit point de pivotement (42) et ledit segment supérieur (32) le long de la ligne droite (41).

7. Dispositif de suspension d'amortissement selon la revendication 4, **caractérisé en ce que** ladite tige de raccordement (8) est disposée entre ledit bras en porte à faux (6) et ladite barre de liaison supérieure (5) dans la direction droite.

8. Dispositif de suspension d'amortissement selon la revendication 3, **caractérisé en ce que** ledit élément de transmission de force (7) est configuré pour s'étendre à partir dudit point de pivotement vers le bas pour se terminer au niveau d'une extrémité couplée inférieure (71), ledit dispositif de suspension d'amortissement comprenant en outre une tige de raccordement (8) disposée pour coupler ladite région distale (36) à ladite extrémité couplée inférieure (71) afin de générer une force de réaction auxiliaire pour pousser ledit élément de transmission de force (7) par le biais de ladite extrémité couplée inférieure (71) contre le mouvement de secousse vers le haut ou vers le bas de ladite extrémité supérieure (34).

9. Dispositif de suspension d'amortissement selon la revendication 1, **caractérisé en outre par** un amortisseur à ressort (13) disposé pour coupler ladite tige de roue (3) à ladite région pivotée (47) dans une position qui est vers l'arrière dudit axe de pivotement (43).

10. Dispositif de suspension d'amortissement selon la revendication 1, **caractérisé en ce que** ledit élément de transmission de force (7) est configuré pour coupler ledit corps de réaction (40) à ladite extrémité de palier (62).

11. Dispositif de suspension d'amortissement selon la revendication 1, **caractérisé en ce que** ledit élément de transmission de force (7) est configuré pour coupler ledit mécanisme de tringlerie à quatre barres dans une position qui est vers l'avant de ladite extrémité reliée inférieure (45), et qui est aligné avec une ligne droite tirée entre ladite extrémité reliée inférieure (45) et ledit axe de pivotement, ledit dispositif de suspension d'amortissement comprenant en outre une tige de raccordement (8) qui est disposée pour coupler ledit segment supérieur (32) audit bras en porte à faux (6) dans une position à proximité de ladite extrémité de palier (62) afin de générer une force de réaction auxiliaire pour pousser ledit élément de transmission de force (7) contre le mouvement de secousse vers le haut ou vers le bas de ladite extrémité supérieure (34).

12. Dispositif de suspension d'amortissement selon la revendication 1, **caractérisé en ce que** ledit élément de transmission de force (7) est configuré pour coupler ledit mécanisme de tringlerie à quatre barres dans une position qui est vers l'avant de ladite extrémité reliée inférieure (45) et qui est dans une ligne, dans le sens de la longueur, de ladite barre de liaison inférieure (5), ledit dispositif de suspension d'amortissement comprenant en outre une tige de raccordement (8) qui est disposée pour coupler ladite région proximale (35) audit élément de transmission de force (7), ladite extrémité de palier (62) étant montée de manière pivotante sur ladite tige de raccordement (8) et étant disposée vers l'arrière dudit élément de transmission de force (7) de sorte que, tandis que ledit élément de transmission de force (7) transmet la force de choc amortie à ladite extrémité de palier (62), ladite tige de raccordement (8) génère une force de réaction auxiliaire pour pousser ledit élément de transmission de force (7) contre le mouvement de secousse vers le haut ou vers le bas de ladite extrémité supérieure (34).
